# FASCICULE DE BREVET EUROPEEN

(11) **EP 0 993 930 B1**
(45) Date de publication et mention de la délivrance du brevet: **06.02.2002**
(21) Numéro de dépôt: 99402551.8
(22) Date de dépôt: 15.10.1999
(51) Int. Cl.: B29C 65/02, B29C 65/74, A61D 19/00, B65B 15/00

(54) **Procédé de fabrication d'un élément constitué d'un support et d'une membrane qui y est soudée, en particulier d'un bouchon de paillette, et ensemble membrane-support obtenu par ce procédé**
Verfahren zum Herstellen eines Gegenstandes bestehend aus einem Träger und einer darauf geschweissten Membran, insbesondere eines Stopfens für ein Röhrchen und eine dadurch hergestellte Membran-Trägergruppe
Process for manufacturing an element constituted of a support and a membrane welded to it, in particular a stop for a straw and assembly of membrane-supports obtained by this process

(30) Priorité: 15.10.1998 FR 9812948
(43) Date de publication de la demande: 19.04.2000
(73) Titulaire: IMV Technologies, 61300 L'Aigle (FR)
(72) Inventeur: Saint-Ramon, Jean-Gérard, 61300 L'Aigle (FR); Beau, Christian, 78960 Voisins le Bretonneux (FR); Houlvigue, Bernard, 61300 L'Aigle (FR)
(74) Mandataire: CABINET BONNET-THIRION

(56) Documents cités:
- EP-A- 0 633 126
- EP-A- 0 917 863
- DE-B- 1 058 426
- FR-A- 1 274 143
- FR-A- 2 421 720
- US-A- 5 503 662
- US-A- 5 749 989
- US-A- 5 772 818

## Description

La présente invention concerne un procédé de fabrication d'un élément constitué d'un support et de membrane qui y est soudée. Plus spécifiquement, l'invention concerne un procédé de fabrication d'un élément constitué d'un support, ayant sensiblement la forme d'un cylindre percé d'un orifice sensiblement coaxial, et de membrane soudée sur une des bases dudit cylindre. La présente invention décrit également un ensemble membrane-supports pouvant être obtenu au cours de ce procédé.

Plus particulièrement, dans un de ses modes de réalisation, l'invention se rapporte à un procédé de fabrication d'un bouchon pour paillette, constitué d'un insert, ayant sensiblement la forme d'un cylindre percé d'un orifice sensiblement coaxial, et de membrane, microporeuse et hydrophobe, étanche aux liquides et perméable aux gaz, qui est soudée sur une des bases dudit cylindre, ainsi qu'à un ensemble membrane microporeuse et hydrophobe-inserts pouvant être obtenu au cours de ce procédé.

US 5 772 818 décrit le soudage d'un filtre composé d'une membrane poreuse à un corps tubulaire.

Les paillettes pour la conservation de petites quantités de substances, notamment de substances biologiques, en particulier de liquides biologiques, sont connues sous la dénomination de "paillette française" et ont été divulguées pour la première fois dans le Brevet Français N° 995 878.

Ces paillettes comprenaient un bouchon tripartite constitué par deux tampons d'une substance fibreuse enserrant une poudre susceptible de se transformer au contact d'un liquide en une pâte ou gel imperméable adhérant à la paroi du tube en créant un bouchon étanche.

Les paillettes à bouchon tripartite mises au point et commercialisées par la Demanderesse donnent toute satisfaction. Néanmoins, une certaine absorption de liquide contenu dans la paillette a pu être constatée, quoique très faible.

Il existe également des bouchons tripartites de taille réduite, mais cette solution ne résout pas non plus le problème de l'absorption.

Une solution qui a été proposée pour pallier le problème ci-dessus a été de remplacer le bouchon tripartite par une bille en matière plastique rigide ou métallique. Cette solution ne s'est pas avérée satisfaisante car, si l'absorption de liquide contenu dans la paillette a été réduite à zéro, de nouvelles difficultés rédhibitoires sont apparues, le bouchon n'étant plus du tout étanche aux liquides.

La Demanderesse a mis au point une paillette ne présentant pas les inconvénients ci-dessus, comportant un bouchon bipartite.

Dans sa demande de brevet en instance FR 97 14729, la Demanderesse décrit une paillette pour la conservation de petites quantités de substances, notamment de substances biologiques, se composant d'un segment de tube muni à l'intérieur de l'une de ses extrémités d'un moyen d'obturation, caractérisée en ce que ledit moyen d'obturation est un bouchon bipartite constitué d'une membrane microporeuse et hydrophobe et d'un insert percé d'un orifice sensiblement coaxial. Selon une disposition de cette demande de brevet, la membrane est positionnée sensiblement perpendiculairement à l'axe longitudinal d'un insert sensiblement cylindrique qui est soudé sur la membrane.

La présente invention propose un procédé de fabrication d'un tel bouchon constitué d'un insert, ayant sensiblement la forme d'un cylindre percé d'un orifice sensiblement coaxial, et d'une membrane microporeuse et hydrophobe, étanche aux liquides mais perméable aux gaz, soudée sur une des bases dudit cylindre.

D'une façon plus générale, l'invention concerne la fabrication d'un élément, constitué d'un support, ayant sensiblement la forme d'un cylindre percé d'un orifice sensiblement coaxial, et d'une membrane soudée sur une des bases dudit cylindre et positionnée sensiblement perpendiculairement à l'axe longitudinal dudit support.

Dans un mode de réalisation particulièrement intéressant, le procédé de la présente invention permet de fabriquer des bouchons bipartites de paillettes et des éléments filtrants.

Dans le cas d'un bouchon constitué d'un insert et d'une membrane qui y est soudée, le support de la membrane est un insert et la membrane est microporeuse et hydrophobe, étanche aux liquides mais perméable aux gaz, et dans le cas d'un élément filtrant, le support est une bague et la membrane est un médium filtrant.

La fabrication de bouchons pour paillettes, constitués d'un insert et d'une membrane, est délicate. Il faut particulièrement veiller à ce que la membrane ne déborde pas de l'insert et qu'il ne reste pas de "bavures" de membrane.

Selon la présente invention, une membrane sensiblement plane est soudée par soudage thermique sur un support, sensiblement perpendiculairement à l'axe longitudinal du support et le support est arraché de ladite membrane dans une direction sensiblement perpendiculaire au plan de ladite membrane.

Le soudage de la membrane sur le support est effectué au moyen d'une matrice ayant une forme telle qu'elle permet après refroidissement l'arrachement du support de la membrane.

Au moment du soudage thermique, on forme une prédécoupe de la membrane, ce qui autorise un arrachement sans bavures.

On utilise par exemple une électrode chauffante qui, du fait de sa forme, permet une prédécoupe de la membrane qui autorise un arrachement sans bavures.

Dans le procédé de la présente invention, on ne recourt pas non plus à un outil d'ébarbage.

Le procédé de la présente invention ne conduit à aucune "bavure" de la membrane sur le support et permet d'obtenir une membrane non débordante par rapport à la section du support, en particulier de l'insert.

Le procédé de l'invention permet qu'aucune membrane restante n'arrive jusqu'au bord d'un insert pour bouchon de paillette.

Pour l'arrachement, la membrane peut être maintenue en place ou bien, au moyen d'un dévetisseur, on emprisonne le support puis on exerce une traction sensiblement perpendiculairement au plan de la membrane. Dans ce cas, on utilisera une plaque de dévetissage venant s'appuyer sur la membrane. Avec une pince ou bien un outil de maintien, on vient arracher le support par traction sensiblement perpendiculaire au plan de ladite membrane.

Une solution pour éviter l'emploi d'un dévetisseur est d'utiliser une plaque à dépression, c'est-à-dire une plaque ayant une pluralité d'orifices, reliée à une pompe à vide. On place alors l'ensemble membrane-supports sur la plaque et on applique une dépression. L'arrachement est effectué dans les mêmes conditions que précédemment.

La membrane est par exemple soudée sur le support au moyen d'une enclume de soudage comportant à un de ses bouts une électrode. Selon un mode de réalisation du procédé de l'invention, on effectue une rotation de l'électrode, d'une fraction de tour à quelques tours, par exemple d'un demi-tour, ce qui facilite l'arrachement en améliorant l'amorce de la rupture entre la membrane et le support.

Le soudage-arrachement selon l'invention permet notamment d'éviter un poinçonnage après soudage.

En pratique, on fabrique d'abord un ensemble constitué par la membrane et des supports, le plan de la membrane étant sensiblement perpendiculaire aux axes longitudinaux desdits supports.

La membrane peut être filtrante ou non, hydrophobe ou non.

Dans le cas de la fabrication d'un bouchon de paillette, comme mentionné ci-dessus, la membrane sera microporeuse et hydrophobe, étanche aux liquides et perméable aux gaz.

La membrane microporeuse utilisée aura alors de préférence un diamètre de pores compris entre environ 0,001 et 10 µm, mieux encore, le diamètre de pores de la membrane sera inférieur ou égal à 0,2 µm. La membrane sera en matériau polymère, par exemple, un matériau choisi parmi le polyéthylène haute densité (PE-HD), les polyamides, la nitrocellulose, les polyesters, les résines phénol-formol (Résines PF), les résines perfluoroalcoxy (PFA) et les résines fluorocarbonées.

Le matériau polymère de la membrane aura avantageusement un point de bulle P supérieur à 6.10⁵ Pa (6 bars) pour 0,2 µm.

Dans la fabrication d'un bouchon de paillette, l'insert sera habituellement en un matériau choisi parmi les matériaux élastomères, les matériaux thermoplastiques et les matériaux élastomères thermoplastiques. L'insert sera avantageusement en polyéthylène.

Selon un mode de réalisation de l'invention, le matériau de l'insert est coloré. On obtient ainsi un "code couleur" sans avoir à recourir à des paillettes colorées.

La présente invention sera à présent illustrée plus en détail en référence aux Figures annexées illustrant la fabrication d'un bouchon de paillette bipartite constitué d'un insert soudé sur une membrane filtrante, à titre d'exemple non limitatif.

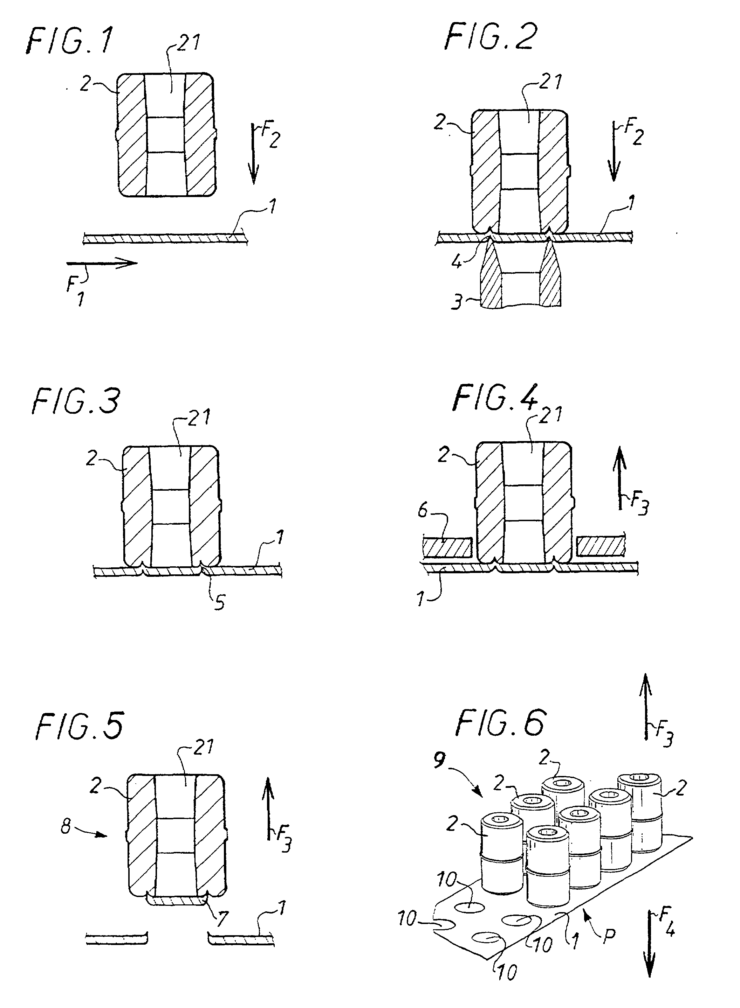

Les Figures 1 à 5 représentent schématiquement les étapes d'un mode de réalisation du procédé de fabrication d'un bouchon de paillette bipartite selon l'invention.

La Figure 1 représente l'insert et la membrane séparés.

La Figure 2 est une vue schématique de l'insert sur la membrane, une enclume de soudage ayant été positionnée pour la soudure de l'insert sur la membrane.

La Figure 3 est une vue schématique de la membrane avec un insert qui y est soudé.

La Figure 4 est une vue schématique de la membrane avec un insert qui y est soudé, un dévetisseur ayant été amené sur la membrane.

La Figure 5 est une vue schématique de l'insert soudé sur la membrane après arrachement.

La Figure 6 représente un ensemble d'inserts soudés sur une membrane sensiblement plane, sensiblement perpendiculairement au plan de la membrane.

Dans les Figures, l'épaisseur de la membrane a été très augmentée, pour la clarté de la représentation.

La membrane 1, en feuille ou en rouleau, défile selon la flèche F₁. L'insert 2, ayant la forme d'un cylindre percé d'un orifice coaxial 21, se trouvant au-dessus de la membrane 1 sera amené sur cette dernière selon la flèche F₂ pour y être soudé au moyen de l'enclume de soudage 3 portant une électrode 4.

La forme de l'électrode chauffante permet une prédécoupe de la membrane, constituant une amorce de rupture 5.

Après soudage de l'insert 2 sur la membrane 1, on laisse refroidir l'ensemble, par exemple par convection naturelle ou convection forcée.

Ensuite, au moyen d'un dévetisseur 6, on emprisonne l'insert 2 puis on exerce une traction sensiblement perpendiculairement au plan de la membrane 1. Avec une pince (non représentée), on vient arracher le support par traction sensiblement perpendiculaire au plan de ladite membrane dans le sens de la flèche F₃. L'amorce de rupture 5 permet un arrachement sans bavures de l'insert 2 comportant une partie de la membrane qui y est soudée du restant de la membrane 1. Ladite partie de la membrane soudée sur l'insert 2 est désignée par 7 et le bouchon constitué du support avec la membrane qui y est soudée est désigné par 8.

Dans la pratique, on soude sur la membrane 1 plusieurs inserts 2, de façon à constituer un ensemble membrane-inserts désigné par 9. Une plaque à dépression (non représentée) est amenée en P et on applique une dépression dans le sens de la flèche F₄. L'arrachement est effectué dans les mêmes conditions que précédemment dans le sens de la flèche F₃. Les repères 10 désignent les trous laissés dans la membrane 1 après arrachement de bouchons constitués par un support avec de la membrane qui y est soudée.

Pour fabriquer un bouchon de paillette, on effectue par exemple la soudure de la membrane sur l'insert à une température de 100 à 130°C pendant environ 1 seconde. L'effort de contact sera de quelques grammes à environ 100 grammes. L'homme du métier déterminera aisément l'effort de contact à fournir en fonction notamment du diamètre de la paillette.

On remarquera en se reportant à la Figure 5 que la membrane restante n'arrive pas jusqu'au bord de l'insert.

L'homme de l'art comprendra que bien que l'invention ait été décrite et illustrée pour des modes de réalisation particuliers, de nombreuses variantes peuvent être envisagées tout en restant dans le cadre de l'invention tel que défini dans les revendications annexées.

## Revendications

1. Procédé de fabrication d'un élément (8) constitué d'un support (2) ayant sensiblement la forme d'un cylindre percé d'un orifice (21) sensiblement coaxial, et de membrane (7) soudée sur l'une des bases dudit cylindre, sensiblement perpendiculairement à l'axe longitudinal dudit support, consistant à effectuer un soudage thermique d'une membrane sensiblement plane (1) sur une des bases d'un support (2) ayant sensiblement la forme d'un cylindre, sensiblement perpendiculairement à l'axe longitudinal dudit support, **caractérisé en ce que**, après refroidissement, on procède à un arrachement dudit support (2) de ladite membrane (1) dans une direction sensiblement perpendiculaire au plan de ladite membrane (1), de sorte qu'une partie (7) de la membrane (1), correspondant sensiblement à ladite base dudit cylindre, reste fixée par soudage sur ledit support (2) et **en ce que** l'on forme une prédécoupe de ladite membrane au moment dudit soudage, autorisant un arrachement sans bavures.

2. Procédé selon la revendication 1, **caractérisé en ce que** le soudage thermique est effectué au moyen d'une enclume de soudage comportant une électrode chauffante (4) ayant une forme telle qu'elle permet une prédécoupe de la membrane.

3. Procédé selon la revendication 2, **caractérisé en ce** l'on effectue une rotation de l'électrode (4) selon un axe sensiblement perpendiculaire au plan de la membrane, ce qui facilite l'arrachement en améliorant l'amorce de la rupture entre la membrane et le support.

4. Procédé selon la revendication 3, **caractérisé en ce que** la rotation est comprise entre une fraction de tour et quelques tours.

5. Procédé selon la revendication 4, **caractérisé en ce que** la rotation est d'un demi-tour.

6. Procédé selon l'une quelconque des revendications 1 à 5, **caractérisé en ce que** le support (2) est emprisonné au moyen d'un dévetisseur (6) et qu'une traction est ensuite exercée sur ladite membrane (1), sensiblement dans la direction de l'axe longitudinal dudit support (2).

7. Procédé selon l'une quelconque des revendications 1 à 5, **caractérisé en ce qu'**après avoir soudé un support (2) sur la membrane, on place une plaque à dépression sous ladite membrane et on applique une dépression sensiblement dans la direction de l'axe longitudinal dudit support (2) avant de procéder à l'arrachement.

8. Procédé selon l'une quelconque des revendications 1 à 7, **caractérisé en ce qu'**on soude sur la membrane (1) plusieurs supports (2) de façon à constituer un ensemble membrane-supports (9) avant de procéder à l'arrachement des supports.

9. Ensemble membrane-supports (9) fabriqué selon la revendication 8, **caractérisé en ce qu'**il est constitué d'une pluralité de supports (2), ayant chacun sensiblement la forme d'un cylindre percé d'un orifice sensiblement coaxial, soudés sur une membrane sensiblement plane (1) sur une de leurs bases, en ayant leur axe longitudinal sensiblement perpendiculaire au plan de ladite membrane.

10. Ensemble selon la revendication 9, **caractérisé en ce que** la membrane est microporeuse et hydrophobe, étanche aux liquides et perméable aux gaz, et que chacun des supports est un insert de bouchon de paillette en un matériau choisi parmi les matériaux élastomères, les matériaux thermoplastiques et les matériaux élastomères thermoplastiques.

11. Ensemble selon la revendication 10, **caractérisé en ce que** le matériau constituant les inserts est du polyéthylène.

12. Ensemble selon l'une des revendications 10 et 11, **caractérisé en ce que** le matériau constituant les inserts est coloré.

## Patentansprüche

1. Verfahren zur Herstellung eines Elements (Gegenstands) (8), bestehend aus einem Träger (2) mit ungefähr der Form eines Zylinders, der mit einer ungefähr koaxialen Öffnung (21) durchbohrt ist, und aus einer Membran (7), die ungefähr senkrecht zur Längsachse des Trägers auf eine der Grundflächen (Basen) des Zylinders geschweißt ist, wobei man eine ungefähr ebene Membran (1) auf eine der Grundflächen eines Trägers (2) mit ungefähr zylindrischer Form ungefähr senkrecht zur Längsachse des Trägers thermisch verschweißt, **dadurch gekennzeichnet, daß** man nach dem Abkühlen den Träger (2) in ungefähr senkrechter Richtung zur Membran (1) von der Membran (1) abtrennt, so daß ein Teil (7) der Membran (1), welcher ungefähr der Grundfläche des Zylinders entspricht, aufgrund der Verschweißung auf dem Träger (2) befestigt bleibt, und daß man die Membran im Augenblick des Verschweißens vorschneidet oder vorstanzt, was ein gratloses Abtrennen ermöglicht.

2. Verfahren nach Anspruch 1, **dadurch gekennzeichnet, daß** das thermische Verschweißen mittels eines Schweißambosses durchgeführt wird, der eine Heizelektrode (4) mit einer solchen Form umfaßt, die ein Vorschneiden oder Vorstanzen der Membran ermöglicht.

3. Verfahren nach Anspruch 2, **dadurch gekennzeichnet, daß** man eine Rotation der Elektrode (4) um die ungefähr senkrecht zur Membran befindliche Achse durchführt, was ein Abtrennen erleichtert, indem der Anriß zwischen der Membran und dem Träger verbessert wird.

4. Verfahren nach Anspruch 3, **dadurch gekennzeichnet, daß** die Rotation zwischen einer teilweisen Umdrehung und einigen Umdrehungen liegt.

5. Verfahren nach Anspruch 4, **dadurch gekennzeichnet, daß** die Rotation eine halbe Umdrehung ist.

6. Verfahren nach einem der Ansprüche 1 bis 5, **dadurch gekennzeichnet, daß** der Träger (2) mittels eines Abstreifers (6) eingeschlossen ist und daß anschließend ein Zug ungefähr in Richtung der Längsachse des Trägers (2) auf die Membran (1) ausgeübt wird.

7. Verfahren nach einem der Ansprüche 1 bis 5, **dadurch gekennzeichnet, daß** man nach Verschweißen eines Trägers (2) auf die Membran eine Unterdruckscheibe unter die Membran anbringt und man einen Unterdruck ungefähr in Richtung der Längsachse des Trägers (2) anlegt, bevor man das Abtrennen durchführt.

8. Verfahren nach einem der Ansprüche 1 bis 7, **dadurch gekennzeichnet, daß** man mehrere Träger (2) auf die Membran (1) schweißt, so daß eine Gesamtheit (Gruppe) aus Membran-Trägern (9) gebildet wird, bevor man mit das Abtrennen der Träger durchführt.

9. Gesamtheit aus Membran-Trägern (9), hergestellt nach Anspruch 8, **dadurch gekennzeichnet, daß** sie aus mehreren Trägern (2) besteht, die jeweils ungefähr die Form eines Zylinders, der mit einer ungefähr koaxialen Öffnung durchbohrt ist, aufweisen und auf einer ihrer Grundflächen mit einer ungefähr ebenen Membran (1) verschweißt sind, wobei ihre Längsachse ungefähr senkrecht zur Membran angeordnet ist.

10. Gesamtheit nach Anspruch 9, **dadurch gekennzeichnet, daß** die Membran mikroporös und hydrophob und dicht gegenüber Flüssigkeiten und durchlässig gegenüber Gasen ist und daß jeder der Träger ein Einsatz für einen Stopfen für ein Röhrchen aus einem Material ist, welches ausgewählt ist aus Elastomerenmaterialien, thermoplastischen Materialien und thermoplastischen Elastomerenmaterialien.

11. Gesamtheit nach Anspruch 10, **dadurch gekennzeichnet, daß** das Material, welches die Einsätze darstellt, Polyethylen ist.

12. Gesamtheit nach einem der Ansprüche 10 und 11, **dadurch gekennzeichnet, daß** das Material, welches die Einsätze darstellt, gefärbt ist.

## Claims

1. A method of making a component (8) consisting of a substantially cylindrical support (2) through which there is a substantially coaxial orifice (21) and a membrane (17) welded to one end of said cylinder substantially perpendicularly to the longitudinal axis of said support, in which method a substantially plane membrane (1) is thermally welded to one end of a substantially cylindrical support (2) substantially perpendicularly to the longitudinal axis of said support, **characterized in that**, after cooling, said support (2) is torn off said membrane (1) in a direction substantially perpendicular to the plane of said membrane (1) so that a portion (7) of the membrane (1) substantially corresponding to said end of said cylinder remains welded to said support (2), and **in that** the membrane is pre-cut during said welding enabling the support to be torn off without leaving burrs.

2. A method according to claim 1, **characterized in that** the thermal welding is effected by means of a welding anvil including a heating electrode (4) having a shape whereby the membrane is pre-cut.

3. A method according to claim 2, **characterized in that** the electrode (4) is rotated about an axis substantially perpendicular to the plane of the membrane to facilitate tearing off by encouraging the onset of rupture between the membrane and the support.

4. A method according to claim 3, **characterized in that** the rotation is in the range from a fraction of a turn to several turns.

5. A method according to claim 4, **characterized in that** the rotation is one half-turn.

6. A method according to any of claims 1 to 5, **characterized in that** the support (2) is trapped by means of a stripper (6) and traction is then applied to said membrane (1) substantially in the direction of the longitudinal axis of said support (2).

7. A method according to any of claims 1 to 5, **characterized in that**, after a support (2) is welded to the membrane, a suction plate is placed under said membrane and suction is applied substantially in the direction of the longitudinal axis of said support (2) before the tearing off is executed.

8. A method according to any of claims 1 to 7, **characterized in that** a plurality of supports (2) are welded to the membrane (1) to constitute a membrane-supports assembly (9) before tearing off the supports.

9. A membrane-supports assembly (9) made according to claim 8, **characterized in that** it comprises a plurality of substantially cylindrical supports (2) through which there is a substantially coaxial orifice and which are welded to a substantially plane membrane (1) at one end with their longitudinal axis substantially perpendicular to the plane of said membrane.

10. An assembly according to claim 9,
**characterized in that** the membrane is microporous, hydrophobic, impervious to liquids and permeable to gases and **in that** each of the supports is an insert for a stopper for a straw made from a material chosen from an elastomer material, a thermoplastics material and a thermoplastics elastomer material.

11. An assembly according to claim 10,
**characterized in that** the material of the inserts is polyethylene.

12. An assembly according to one of claims 10 and 11, **characterized in that** the material of the inserts is coloured.
